# EUROPEAN PATENT APPLICATION

(11) **EP 3 978 778 A1**
(43) Date of publication of application: **06.04.2022**
(21) Application number: 20815285.0
(22) Date of filing: 30.05.2020
(51) Int. Cl.: F16F 7/09, F16F 9/19, F16F 9/32, F16F 9/34, B60N 2/52, B60N 2/54

(54) **DAMPER AND SEAT SUSPENSION MECHANISM**

(30) Priority: 31.05.2019 JP 2019103388
(71) Applicant: Delta Kogyo Co., Ltd., Aki-gun, Hiroshima 735-8501 (JP)
(72) Inventor: FUJITA Etsunori, Aki-gun, Hiroshima 735-8501 (JP); OGURA Yumi, Aki-gun, Hiroshima 735-8501 (JP); SUGIMOTO Eiji, Aki-gun, Hiroshima 735-8501 (JP); MASHINO Masaharu, Aki-gun, Hiroshima 735-8501 (JP); MAKITA Soichi, Aki-gun, Hiroshima 735-8501 (JP); KUWANO Ryuji, Aki-gun, Hiroshima 735-8501 (JP)
(74) Representative: Hoffmann Eitle
(86) International application number: PCT/JP2020/021506
(87) International publication number: WO 2020/241896

(57) **Abstract**

To cause an appropriate damping force to work according to a relative displacement with a simple configuration. A movable inner cylinder 3 slidable in an outer cylinder 2 in an axial direction and having orifices 31 formed in its peripheral wall 31 is provided, a piston 5 around which a linear member 52 that generates a frictional force is wound is further provided in the movable inner cylinder 3, and a viscous liquid 7 is filled in the outer cylinder 2 including the inside of the movable inner cylinder 3. Accordingly, when the piston 5 moves together with the movable inner cylinder 3, a high damping force is not exerted, whereas when the piston 5 relatively moves in the movable inner cylinder 3, the high damping force is exerted owing to viscous friction between the piston 5 and the movable inner cylinder 3 and the viscous resistance of the viscous liquid passing through the orifices.

## Description

### Technical Field

The present invention relates to a damper and a seat suspension mechanism using the damper.

### Background Art

Various dampers (shock absorbers) for absorbing vibration during traveling are provided in a seat suspension mechanism for supporting a seat of an automobile, a suspension disposed between a vehicle wheel and a vehicle body, and the like. Various dampers are also used for vibration absorption, shock buffering, and the like not only in vehicles such as automobiles but also in various industrial apparatus, joint parts of robots, and opening/closing parts and hinge parts of doors, personal computers, and so on. As such dampers, a damper (a viscous damper or an oil damper) having a viscous liquid filled in its cylinder and using viscous resistance generated by the sliding of a piston in the viscous liquid as in Patent Document 1, a friction damper using a frictional force between a piston and a cylinder as in Patent Document 2, and so on are known.

### Prior Art Document

### Patent Document

Patent Document 1: Japanese Patent Application Laid-open No. 2015-78725
Patent Document 2: Japanese Patent Application Laid-open No. 2015-117754

### Disclosure of the Invention

### Problems to Be Solved by the Invention

The use of the viscous resistance of the viscous liquid as in Patent Document 1 may not enable to obtain a sufficient damping force in a small-stroke, low-velocity zone. Further, if the stroke of an input is small, the friction damper of Patent Document 2 may become a rigid body without functioning as a damper because of a large friction damping force.

The present invention was made in consideration of the above and has an object to provide a damper that has a simple structure yet is capable of increasing a damping force according to a stroke amount and thus is capable of contributing to an improvement in damping characteristics in a seat suspension mechanism and so on, and to provide a seat suspension mechanism using the damper.

### Means for Solving the Problems

To solve the above problem, a damper of the present invention includes:
an outer cylinder;
a movable inner cylinder having a shorter axial-direction length than an axial-direction length of an inner space of the outer cylinder and movable in the outer cylinder;
a piston around whose outer peripheral surface a linear member that generates a frictional force with the movable inner cylinder is wound, and which operates in the axial direction in the movable inner cylinder; and
movable inner cylinder cover members provided at axial-direction ends of the movable inner cylinder,
wherein an orifice is formed in a peripheral wall of the movable inner cylinder, and a viscous liquid is filled in the outer cylinder including the inside of the movable inner cylinder and the nonwoven fabric, and
wherein, when the piston moves relative to the movable inner cylinder, a predetermined damping force is generatable owing to viscous friction generated between the piston and the movable inner cylinder and owing to viscous resistance of the viscous liquid passing through the orifice, whereas when the piston moves in the outer cylinder together with the movable inner cylinder, the predetermined damping force is not generated.

Preferably, a buffer member impregnated with the viscous liquid is provided in a gap between each of the movable inner cylinder cover members and each end wall of the outer cylinder.

Preferably, in the movable inner cylinder and the movable inner cylinder cover members, at least inner surfaces are lower in friction coefficient than the viscous liquid.

Preferably, the viscous liquid is low-penetration grease.

Further, a seat suspension mechanism of the present invention is a seat suspension mechanism which is disposed between a vehicle body structure and a seat, the seat suspension mechanism including:
a spring mechanism through which an upper frame as the movable member attached to the seat is elastically supported on a lower frame as the fixed member attached to the vehicle body structure; and
the aforesaid damper which exerts a damping force that absorbs energy generated when the upper frame moves up and down relative to the lower frame.

### Effect of the Invention

According to the present invention, the movable inner cylinder slidable in the axial direction in the outer cylinder and having the orifices formed in its peripheral wall is provided, the piston around which the linear member that generates a frictional force is further provided in the movable inner cylinder, and the viscous liquid is filled in the outer cylinder including the inside of the movable inner cylinder. Accordingly, when the piston moves together with the movable inner cylinder, a high damping force is not exerted, whereas when the piston moves relatively in the movable cylinder, the high damping force is exerted owing to the viscous friction generated between the piston and the movable inner cylinder and the viscous resistance of the viscous liquid passing through the orifice. Therefore, the present invention, when applied to a seat suspension mechanism and the like, achieves efficient vibration damping near a balance point owning to the operation of the spring mechanism, while capable of increasing a damping force near up/down movement ends. Further, in the case where the buffer member having a function of absorbing the viscous liquid is provided between each of the movable inner cylinder cover members and each of the end walls of the outer cylinder, the damping force at stroke ends more increases.

### Brief Description of Drawings

[FIG. 1] FIG. 1 is a sectional view illustrating a damper according to one embodiment of the present invention.
[FIG. 2] FIG. 2 is a Lissajous figure illustrating the damping characteristics of the damper according to the embodiment.
[FIG. 3] FIG. 3 is a schematic mechanism view of a seat suspension mechanism using the damper according to the embodiment.
[FIG. 4] FIG. 4 is a view illustrating an arrangement relation of the damper, a magnetic spring, torsion bars, and so on in the seat suspension mechanism in FIG. 3.
[FIG. 5] FIG. 5 is a chart illustrating the load-deflection characteristics of the seat suspension mechanism in FIG. 3.
[FIG. 6] FIG. 6 is a chart illustrating the results of a vibration test regarding EM6.
[FIG. 7] FIG. 7 is a chart illustrating the results of a vibration test regarding EM7.
[FIG. 8] FIG. 8 is a chart illustrating the results of a vibration test regarding EM8.
[FIG. 9] FIG. 9 is a chart illustrating the result of a damping test.
[FIGs. 10] FIGs. 10 are views illustrating a structure in which a pantograph link mechanism is added to the seat suspension mechanism, (a) illustrating a state in which an upper frame is at the uppermost end, (b) illustrating a state in which the upper frame is at a balance point, and (c) illustrating a state in which the upper frame is at the lowest end.
[FIGs. 11] FIGs. 11 are views illustrating a structure in which a tensile coil spring and a damper for pantograph are removed from FIGs. 10 for explaining the movement of a fixed-side link and a movable-side link of the pantograph link mechanism, (a) illustrating a state in which the upper frame is at the uppermost end, (b) illustrating a state in which the upper frame is at the balance point, and (c) illustrating a state in which the upper frame is at the lowest end.
[FIG. 12] FIG. 12 is a chart illustrating the load-deflection characteristics of the structure in which the pantograph link mechanism is added to the seat suspension mechanism.

### Description of Embodiments

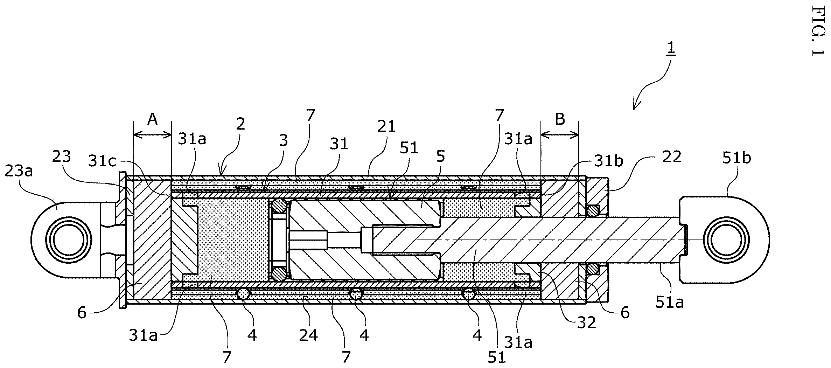

The present invention will be hereinafter described in more detail based on embodiments illustrated in the drawings. FIG. 1 is a view illustrating a damper 1 of this embodiment. The damper 1 of this embodiment is of a telescopic type having an outer cylinder 2 and a movable inner cylinder 3 and further having a piston 5 which operates in the movable inner cylinder 3 in the axial direction, and so on.

The outer cylinder 2 is closed with end walls 22, 23 provided at ends of its peripheral wall 21. In an inner space 24 of the outer cylinder 2, the movable inner cylinder 3 whose axial-direction length is shorter than the axial-direction length of the inner space 24 (the distance between inner surfaces of the end walls 22, 23 at the ends) is provided.

The movable inner cylinder 3 has orifices 31a formed in its peripheral wall 31. In this embodiment, the two orifices 31a are formed close to each of axial-direction ends 31b, 31c of the peripheral wall 21. The number of the orifices 31a formed and their pore size may be any as long as they can produce a desired viscous resistance, and depend on the viscosity and so on of a viscous liquid. Further, movable inner cylinder cover members 32, 33 are attached to the ends 31b, 31c to close them.

Between the inner surface of the peripheral wall 21 of the outer cylinder 2 and the outer surface of the peripheral wall 31 of the movable inner cylinder 3, ball members 4 are provided to contribute to a reduction in sliding resistance when the movable inner cylinder 3 relatively moves in the outer cylinder 2.

The piston 5 has a predetermined length in the axial direction and is provided in the movable inner cylinder 3. A piston rod 51 is connected to the radial-direction center of the piston 5, and an end portion 51a of the piston rod 51 penetrates through the movable inner cylinder cover member 32 of the movable inner cylinder 3 and the end wall 22 of the outer cylinder 2 to project to the outside. An attachment portion 51b provided on the end 51a of the piston rod 51 and an attachment portion 23a provided on the other end wall 23 of the outer cylinder 2 to protrude outward are attached to a control target.

Around the outer peripheral surface of the piston 5, a linear member 52 is wound. The linear member 52 is densely wound with almost no gap left in the axial direction on the outer peripheral surface of the piston 5. The linear member 52 is formed of a thread or a cord. Its material is not limited and it is formed of synthetic fiber, natural fiber, or the like. Further, the thread can be either a monofilament or a multifilament but is preferably formed of a multifilament composed of a fiber bundle because such a multifilament facilitates the adhesion of a later-described viscous liquid 7 and is capable of coming into contact with the inner surface of the peripheral wall 31 of the movable inner cylinder 3 at multiple points and thus a high friction damping force can be expected from this. In either of the cases, short fibers may be planted on the surface of the thread or cord forming the linear member 52, or the surface of the thread or cord forming the linear member 52 may be raised. Such planting of the short fibers or raising facilitates the adhesion of the viscous liquid 7.

The wire diameter (outside diameter) of the thread or cord forming the linear member 52 is not limited either but is selected such that a predetermined frictional force can be exerted on the inner surface of the movable inner cylinder 3 at the time of the movement relative to the movable inner cylinder 3. Further, depending on its wire diameter, it can be wound in multiple layers such as double layers or triple layers around the outer peripheral surface of the piston 5.

The gaps between the movable inner cylinder cover members 32, 33 of the movable inner cylinder 3 and the end walls 22, 23 of the outer cylinder 2 are each provided with a buffer member 6. The buffer members 6 are formed of a material having a function of absorbing the viscous liquid 7 filled in the outer cylinder 2, for example, a nonwoven fabric impregnatable with the viscous liquid 7. As such a nonwoven fabric, brand name "FELIBENDY (registered trademark)" of KURARAY CO., LTD. is usable, for instance. The natural length of the buffer members 6 is preferably longer than the gaps (ranges indicated by reference signs A, B in FIG. 1) between the movable inner cylinder cover members 32, 33 of the movable inner cylinder 3 and the end walls 22, 23 of the outer cylinder 2. Preferably, the buffer members 6 each have a length about equal to or more than the total length of the two gaps (for example, 20 mm or more if the total length of the two gaps A, B is 20 mm). Consequently, the buffer members 6 can exhibit an enhanced shock absorbing function when the movable inner cylinder 3 is at stroke ends.

The viscous liquid 7 is filled in the outer cylinder 2 including the inside of the movable inner cylinder 3. Considering the adhesion to the linear member 52, the viscous liquid 7 is preferably low-penetration grease. The low-penetration grease mentioned here is preferably one whose JIS K 2220 penetration at 25°C is within a range of 175 to 340, more preferably within a range of 265 to 295.

Especially in the case where such grease is used as the viscous liquid 7 as in this embodiment, at least the inner surfaces of the movable inner cylinder 3 and the movable inner cylinder cover members 32, 33 which constitute flow paths of the viscous liquid 7 are preferably lower in friction coefficient than the viscous liquid 7 so that the fluidity of the viscous liquid can be increased. Specifically, as the movable inner cylinder 3, one made of stainless steel at least whose inner surface is mirror-finished is usable. Further, the movable inner cylinder cover members 32, 33 may be those molded from a thermoplastic resin with a potassium titanate fiber added (brand name "POTICON" manufactured by Otsuka Chemical Col., Ltd.).

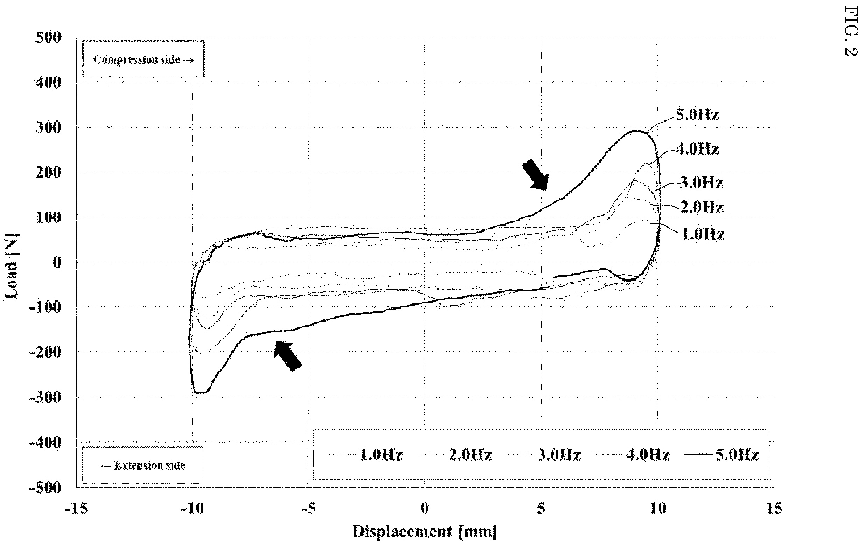

FIG. 2 illustrates the results of the measurement of the damping characteristics of the damper 1 of this embodiment. In the damper 1 used for the measurement, the gaps between the movable inner cylinder cover members 32, 33 of the movable inner cylinder 3 and the end walls 22, 23 of the outer cylinder 2 (free play zones (the ranges indicated by reference signs A, B in FIG. 1)) are each 10 mm and their total length is 20 mm. Excitation waveforms used here were sine waves whose velocity was highest when the displacement was 0 mm, and their frequencies were 1.0 to 5.0 Hz corresponding to the vicinity of a resonant frequency of a seat suspension mechanism for automobiles.

As illustrated in FIG. 2, the damping force of the damper 1 of this embodiment does not greatly change when the displacement is between about -7 and about +7 mm. This indicates that the movable inner cylinder 3 is displaced in the axial direction together with the piston 5. That is, this is a change within the free play zones and the damping force does not greatly change. However, since the buffer members 6 impregnated with the viscous liquid 7 are provided in the free play zones, the acceleration due to the movement of the movable inner cylinder 3 is absorbed. As the displacement more increases, the damping force changes to a certain amount or more. This is because the movable inner cylinder cover members 32, 33 of the movable inner cylinder 3 are displaced in the free play zones to gradually compress the buffer members 6 and accordingly, when the displacement reaches a predetermined amount or more, the relative displacement of the piston 5 in the movable inner cylinder 3 starts. Consequently, viscous friction acts between the linear member 52 of the piston 5 and the movable inner cylinder 3 and at the same time, the viscous resistance of the viscous liquid 7 passing through the orifices 31a acts, resulting in the generation of the predetermined damping force or more. As the movable inner cylinder 3 further approaches the stroke ends, the buffer members 6 are further compressed, so that the damping force increases, which reduces a bottoming feeling.

As is understood from the above, the damper 1 of this embodiment not only has the characteristic that its damping force increases according to the stroke amount but also has a characteristic of increasing in the damping force as the excitation frequency is higher and also having velocity dependence.

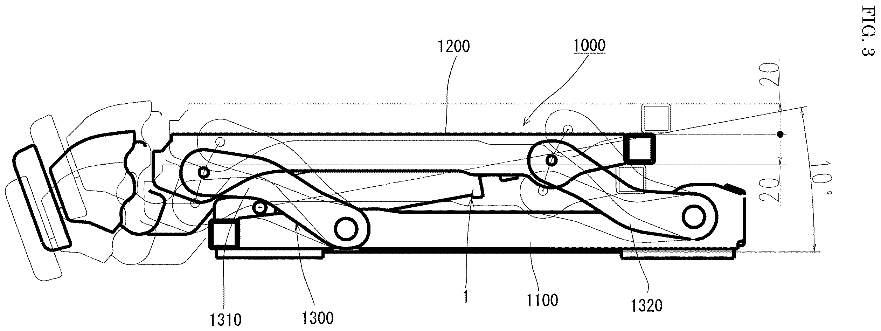

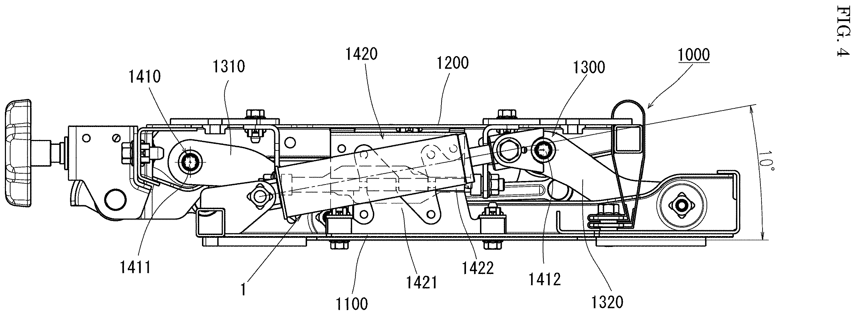

FIG. 3 and FIG. 4 illustrate a schematic structure of a seat suspension mechanism 1000 to which the damper 1 of this embodiment is applied. This seat suspension mechanism 1000 includes a lower frame 1100 as a fixed member attached to a vehicle structure (not illustrated) and an upper frame 1200 attached to a seat (not illustrated).

The lower frame 1100 supports the upper frame 1200 through a parallel link 1300. The upper frame 1200 is further elastically supported through a spring mechanism including a linear spring 1410 and a magnetic spring 1420. The linear spring 1410 is composed of torsion bars 1411, 1412 provided at portions connected to the upper frame 1200, in a front link 1310 and a rear link 1320 forming the parallel link 1300, and bias the upper frame 1200 through the parallel link 1300 in a direction in which the upper frame 1200 becomes apart from the lower frame 1100.

The magnetic spring 1420 is similar to those disclosed in Patent Documents 2 and 3, details of which are omitted, and includes: a stationary magnet unit 1421 fixed to the lower frame 1100 and having a pair of stationary magnets which are provided with, for example, their same poles facing each other; and a movable magnet unit 1422 supported by a frame provided on the upper frame 1200 and having a movable magnet movable up and down between the pair of stationary magnets. When the upper frame 1200 moves up and down relative to the lower frame 1100, the movable magnet is displaced in the gap between the pair of stationary magnets, and depending on its relative position, the spring characteristic of the magnetic spring 1420 linearly changes. Specifically, if a characteristic that a restoring force increases in the operation direction of an elastic force (restoring force) of the torsion bars 1411, 1412 which are linear springs, that is, in such a direction as to separate the upper frame 1200 from the lower frame 1100 is defined as a positive spring characteristic, the magnetic spring 1420 exhibits a negative spring characteristic that the restoring force in the aforesaid direction decreases, in a predetermined displacement range of the load-deflection characteristic. Therefore, in the range where the negative spring characteristic of the magnetic spring 1420 functions, since this negative spring characteristic is combined with a spring constant (positive spring constant) of the positive spring characteristic of the torsion bars 1411, 1412, there is a constant-load zone where a variation of a load value as the whole spring constant is a predetermined amount or less, that is, a zone where the spring constant is substantially zero (preferably, the spring constant is in a range of about -10 N/mm to about 10 N/mm) even if the displacement increases. Therefore, if this range where the spring constant is substantially zero is adjusted to be near a balance point when a person is seated, it is possible to obtain a high vibration absorbing performance.

In the seat suspension mechanism 1000, the damper 1 of this embodiment is obliquely extended between the lower frame 1100 and the upper frame 1200. Here, the damper 1 is attached obliquely to the lower frame 1100 with an attachment angle of 10 degrees. Further, the seat suspension mechanism 1000 is designed such that the stroke of the upper frame 1200 from the lowest end to the uppermost end is 40 mm.

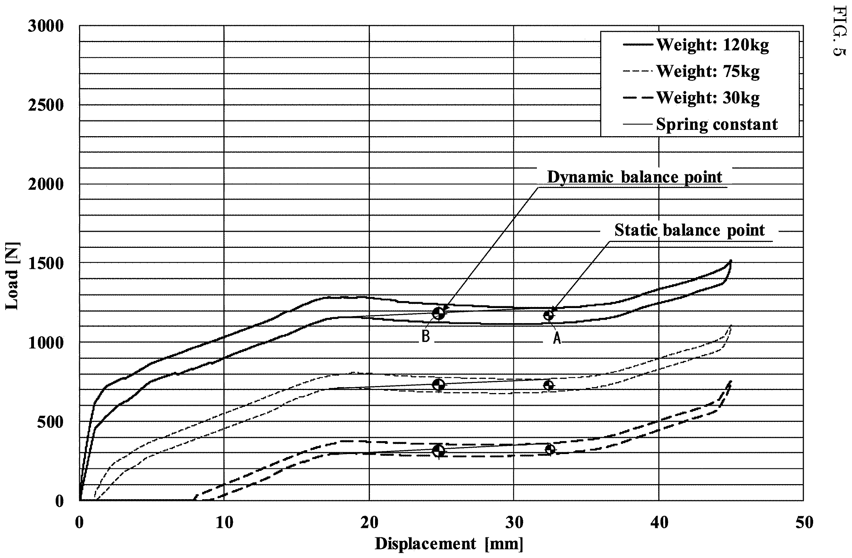

FIG. 5 is a chart illustrating the load-deflection characteristics of the seat suspension mechanism 1000 in the cases of respective load masses. The balance point was set according to the load mass, and a static balance point was set at the A position 32.5 mm apart from the lowest end (0 mm position). However, in a dynamic state, a dynamic balance point was at the B position. A reason why the balance point moves to the B position in the dynamic state is that vibrational energy input from the unsprung part is converted to potential energy of the magnetic spring to generate a lifting force resisting the gravity. That is, when this lifting force exceeds the whole frictional force of the seat suspension mechanism 1000, the sprung part swings and the dynamic balance point moves.

In FIG. 5, the dynamic spring constant in the constant load zone is about 4500 N/m including the frictional force of the whole seat suspension mechanism 1000 when the amplitude is ±7.5 mm. At this time, the frictional force was 76 N when the load was light (Weight: 75 kg) and was 114 N when the load was high (Weight: 120 g). Therefore, the dynamic spring constant cannot exceed 4500 N/m. A suitable whole frictional force experimentally found from a free vibration waveform is 80 N for a person weighing 60 kg, and is 133 N for a person weighing 100 kg. The aforesaid values of 76 N at the light-load time and 114 N at the high-load time are close to these experimentally found values. Therefore, phase control is performed from a low-frequency band and an opposite phase is easily formed around the balance point, achieving excellent vibration absorbency.

Next, a seat was attached to the upper frame 1200 of the seat suspension mechanism 1000, and a vibration test was conducted while a subject A was seated on the seat. The subject A is 171 cm tall and weighs 65 kg.

For excitation, input spectral classes (ISO 10326-1) stipulated for the types of machines in JIS A 8304:2001 "Earth-moving machinery-laboratory evaluation of operator seat variation" based on ISO 7096:2000 are used, and vibration absorbing performance is determined based on S.E.A.T values (Seat Effective Amplitude Transmissibility factor of the seat) in the respective cases and standard values of a damping test. The input spectral classes of the excitation waveforms are EM6, EM7, and EM8. The input spectral class EM6 is a standard for "a crawler tractor-dozer with 50,000 kg or less", and the excitation waveform has a 7.6 Hz dominant frequency and a PSD maximum value of 0.34 (m/s²)²/Hz, and a S.E.A.T value of less than 0.7 and a vibration transmissibility of less than 1.5 at a resonance frequency in a vertical axis direction have to be satisfied. The input spectral class EM7 is a standard for "a compact damper", and the excitation waveform has a 3.24 Hz dominant frequency and a maximum PSD value of 5.56 (m/s²)²/Hz, and a S.E.A.T value of less than 0.6 and a vibration transmissibility of less than 2.0 at a resonance frequency in a vertical axis direction have to be satisfied. The input spectral class EM8 is a standard for "a compact loader with 4,500 kg weight or less", and the excitation waveform has a 3.3 Hz dominant frequency and a maximum PSD value of 0.4 (m/s²)²/Hz, and a S.E.A.T value of less than 0.8 and a vibration transmissibility of less than 2.0 at a resonance frequency in a vertical axis direction have to be satisfied.

Further, the excitation waveform of the damping test is a logarithmic swept sine wave (0.5 to 4.0 Hz) and an input amplitude is a ±8 mm displacement amplitude corresponding to 40% of the total stroke 40 mm of the seat suspension mechanism 1000. A load mass was a 75 kg rubber weight, which was fixed with a belt.

As a vibrator, a 6-axis vibrator of DELTA TOOLING CO., LTD. was used for EM7, EM8, and the damping test, and a 3-axis electrodynamic vibrator (3-axis vibrator TAS-1000-5 manufactured by IMV Corp., the maximum excitation stroke 60 mm) was used for EM6. On each of shake tables of these vibrators, the seat suspension mechanism 1000 to whose upper frame 1200 the seat was attached as described above was set.

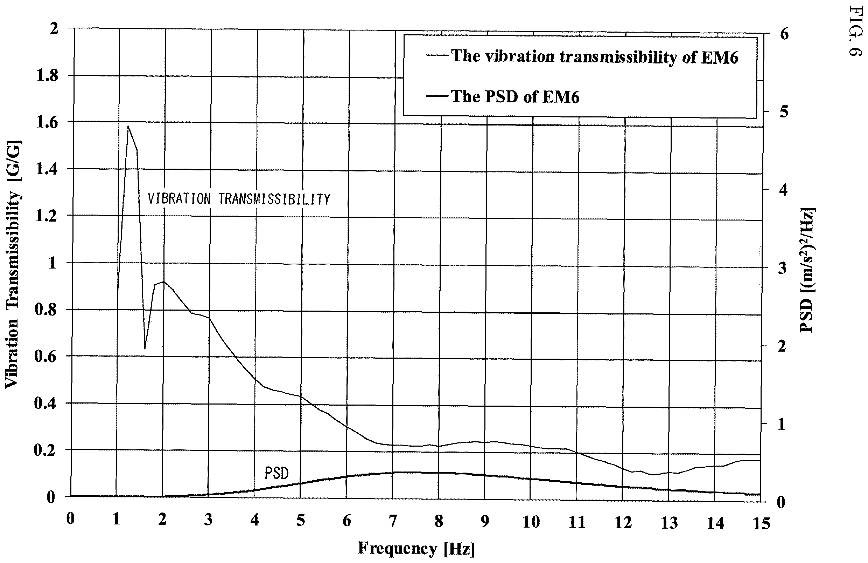

FIG. 6, FIG. 7, and FIG. 8 illustrate the excitation waveforms EM6, EM7, and EM8 and their vibration transmissibilities at the time of the vibration test, all of which are test data of the subject A. As is seen from FIG. 6, in the case of the excitation waveform EM6, a resonance frequency was 1.2 Hz and a gain of a resonance peak was 1.58. The gain can be kept as low as 0.92 though increasing near 2.0 Hz. Further, at 7.6 Hz where the acceleration of the excitation waveform reaches the peak, the gain reduces to 0.22. This is because the resonance frequency and the resonance gain could be set low owing to the damper 1 of this embodiment. Further, the damper 1 and the frictional force of about 100 N contribute to a reduction in a damping factor and it was possible to decrease the gain in a high-frequency band. Note that the S.E.A.T. value was 0.53, which satisfied the aforesaid standard.

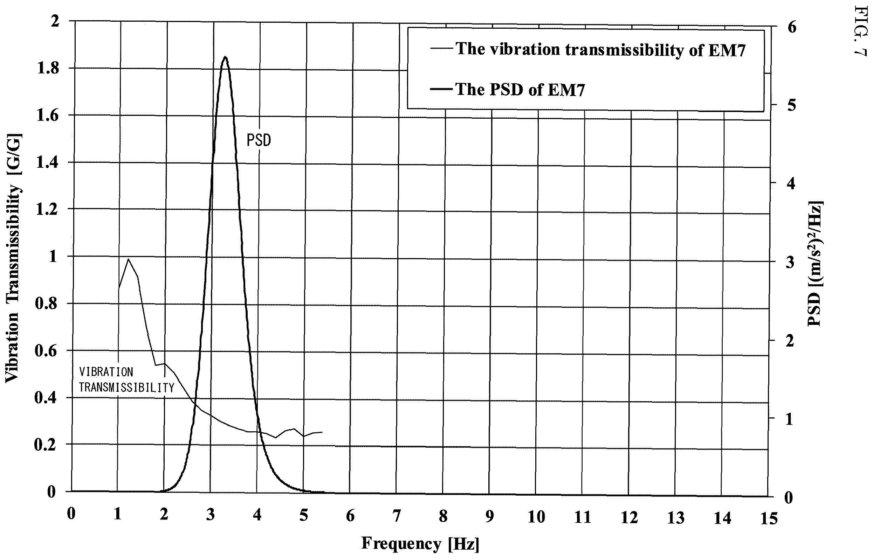

As is seen from FIG. 7, the resonance frequency of EM7 was 1.2 Hz and a gain of a resonance peak was 0.99. Regarding EM7 whose vibration amplitude is the largest among the excitation waveforms in ISO 7096:2000 standard and which is difficult to conform, a gain at 3.24 Hz where the acceleration of the excitation waveform reaches the peak decreases to 0.3. This indicates that, because the damper 1 has the characteristic of changing in damping force according to the amplitude of the excitation waveform, the vibration damping mechanism sufficiently worked on the large-amplitude excitation waveform with a low frequency which is near the resonance frequency of the seat suspension mechanism 1000. Note that the S.E.A.T value was 0.59, which satisfied the aforesaid standard.

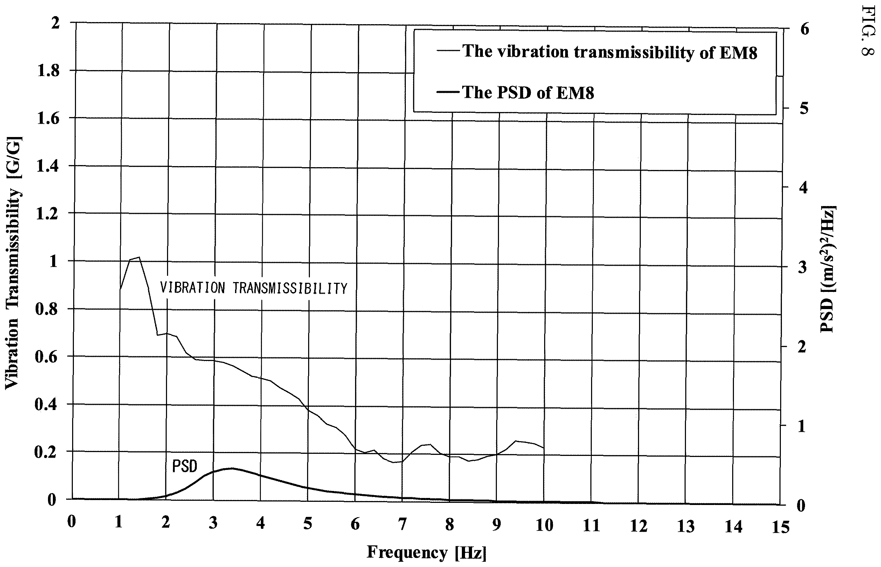

As is seen from FIG. 8, the resonance frequency of EM8 was 1.4 Hz and a gain of a resonance peak was 1.0. The peak frequency of the acceleration of the EM8 excitation waveform is 3.3 Hz, which is approximately equal to that of EM7, but a gain decrease degree is smaller as compared with the vibration transmissibility of EM7. This is because the acceleration of this excitation waveform is low and the damping factor becomes high owing to the damping force of the damper 1 and the frictional force of the whole seat suspension mechanism and accordingly the gain becomes high at high frequencies. Note that the S.E.A.T value was 0.66, which satisfied the aforesaid standard.

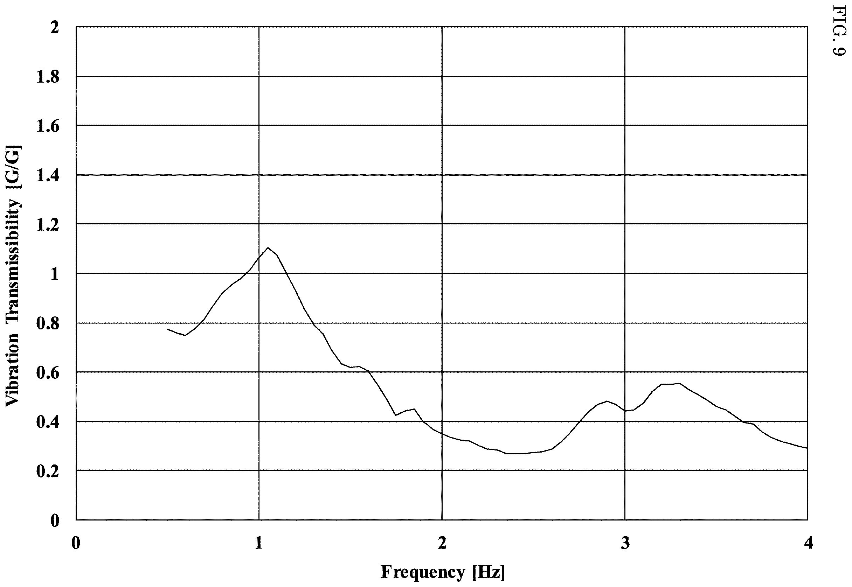

As is seen from FIG. 9, the resonance frequency of the seat suspension mechanism 1000 was 1.05 Hz and a gain of a resonance peak was 1.1. At 1.15 Hz, the gain becomes lower than 1.0 and at 1.7 Hz, the gain becomes lower than 0.5. This indicates that, despite being a single degree of freedom system with a 40 mm stroke, the seat suspension mechanism 1000 has a high vibration damping performance because it has the constant load zone and the damper 1 has the free play zones. Further, it has the characteristic that the dynamic balance point moves from the A position which is the static balance point to the B position as illustrated in FIG. 5, has a dynamic spring constant of 4500 N/m, performs the phase control from a low-frequency band, and forms the opposite phase early, and thus is excellent in vibration absorbency. Note that the gain increase at 3.3 Hz is due to the characteristic of the seat.

The comparison of FIG. 6 to FIG. 9 shows that the resonance frequency and the gain of the resonance peak differ depending on the input condition, and the seat suspension mechanism 1000 has input dependence.

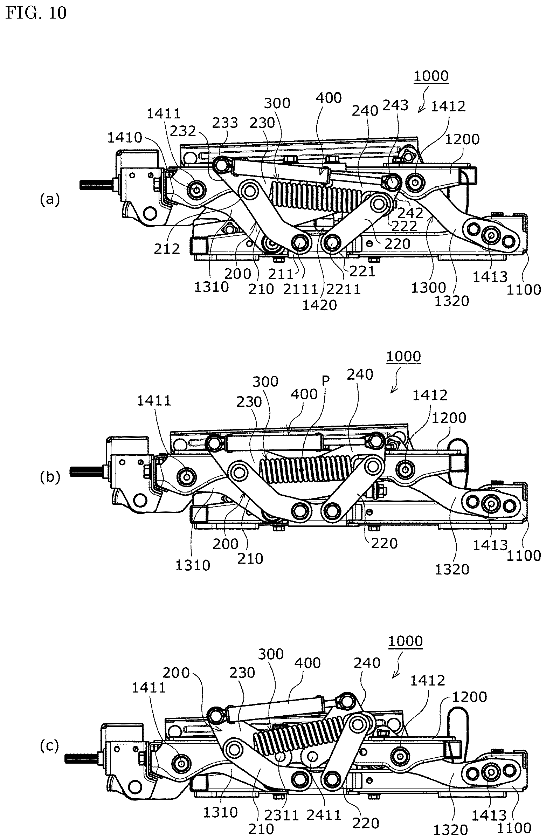

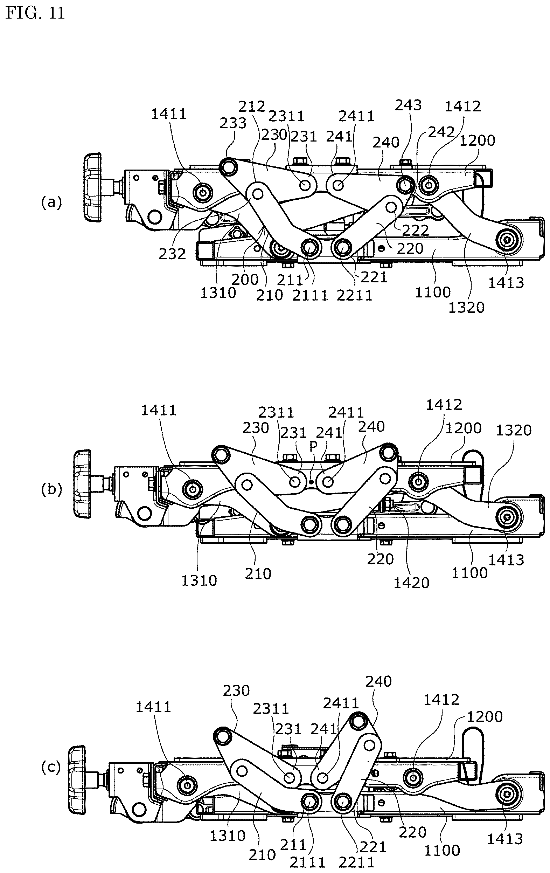

FIGs. 10 to FIG. 12 are views illustrating a structure in which a pantograph link mechanism 200 is added between the lower frame 1100 and the upper frame 1200 of the above-described seat suspension mechanism 1000. As illustrated in FIGs. 11(a) to (c), the pantograph link mechanism 200 have: two fixed-side links 210, 220 whose ends (fixed member-supported portions) 211, 221 are supported by the lower frame 1100 which is a fixed member, through shaft members 2111, 2211 and which are arranged to open wider in a substantially V-shape as they go toward the other ends (fixed member-connection portions) 212, 222; and two movable-side links 230, 240 whose ends (movable member-supported portions) 231, 241 are supported by the upper frame 1200 which is a movable member, through shaft members 2311, 2411 and which are arranged such that a virtual line connecting these form a substantially inverted V-shape from the ends (movable member-supported portions) 231, 241 toward the other ends (movable-side connection portions) 232, 242 when the upper frame 1200 is at the uppermost end position.

The movable-side links 230, 240 are substantially triangular-shaped in a side view, and in their portions projecting more upward than virtual lines connecting the ends (movable member-supported portions) 231, 241 and the other ends (movable-side connection portions) 232, 242, further have damper engagement portions 233, 243 where to hang a damper (hereinafter, a "damper for pantograph") 400.

As illustrated in FIGs. 10(a) to (c), between the other ends (movable-side connection portions) 232, 242 of the movable-side links 230, 240, a tensile coil spring 300 is suspended. Further, a point where the movable member-supported portions (shaft members 2311, 2411) which are the ends 231, 241 of the movable-side links 230, 240 overlap with a straight line connecting fulcrums of the tensile coil spring 300 (the ends (movable-side connection portions) 232, 242)) in a side view is a dead point P of the movable-side links 230, 240. The movable-side links 230, 240 are rotatable in both directions toward the one-side region and the other-side region sandwiching the dead point P.

According to this link mechanism 200, the tensile coil spring 300 biases the movable-side links 230, 240 such that their orientations become opposite when the upper frame 1200 is more upward and when it is more downward than the dead point P. Therefore, the tensile coil spring 300 biases the ends (movable member-supported portions) 231, 241 of the movable-side links 230, 240 upward when the upper frame 1200 is at a position higher than the balance point, and biases the ends (movable member-supported portions) 231, 241 of the movable-side links 230, 240 downward when the upper frame 1200 is at a position lower than the balance point.

Consequently, when the upper frame 1200 is at a position lower than the balance point, the ends (movable member-supported portions) 231, 241 of the movable-side links 230, 240 are biased downward. At this time, the load of the tensile coil spring 300 is highest at the dead point P, and the load decreases both when the upper frame 1200 goes upward and when it goes downward.

If the setting is made such that the movable-side links 230, 240 are at the position of the dead point P when the upper frame 1200 of the seat suspension mechanism 1000 is near the balance point, the ends (movable member-supported portions) 231, 241 of the movable-side inks 230, 240 are biased downward when the upper frame 1200 is displaced to a lower position than the dead point P, so that a negative spring characteristic of the tensile coil spring 300 is exhibited.

Therefore, in the structure including the pantograph link mechanism 200, not only the negative spring characteristic of the magnetic spring 1420 acts but also the negative spring characteristic of the tensile coil spring 300 is superimposed. This makes it possible to form the constant load zone even if those having a higher spring constant are used as the torsion bars 1411, 1412 which exhibit the positive spring characteristic, enabling to cope with a further increase of a load mass. Further, when the upper frame 1200 is displaced from the position lower than the dead point P to a position higher than the dead point P, the negative spring characteristic of the tensile coil spring 300 of the link mechanism 200 tries to restrain this movement, also enabling an improvement in the shock absorbing function.

The damper 400 for pantograph is suspended between the damper engagement portions 233, 243 as described above. The kind of the damper 400 for pantograph usable here is not limited, but it is preferable to use a damper, disclosed in WO2018/025992, in which a viscous liquid such as grease is stuck to the periphery of a piston sliding in a cylinder and which can exhibit a high damping force as a whole owing to the combination of a viscous frictional force with a viscous damping force. It is also possible to adopt one having the same structure as that of the above-described damper 1 which is obliquely suspended between the upper frame 1200 and the lower frame 1100 of the seat suspension mechanism 1000 and has the free play zones. In this case, the damping force is small near the balance point, and near the end points of the operating range, that is, near the uppermost end and the lowest end of the upper frame 1200, the largest damping force is exhibited. Therefore, owing to the spring characteristic that the spring constant becomes substantially zero near the balance point, vibration is absorbed, and for a large-amplitude input, owing to the operation of the damper 400 for pantograph in addition to the aforesaid operation of the damper 1, it is possible to alleviate an impact force and increase the shock absorbing function of reducing the feeling of touching the bottom and touching the top, near the uppermost end and near the lowest end.

The seat suspension mechanism 1000 and the pantograph link mechanism 200 are arranged in parallel, and the pantograph link mechanism 200 acts to restrain the movement of the seat suspension mechanism 1000. Therefore, phases where their operations become effective deviate from each other, achieving the efficient operation against vibration and an impact force.

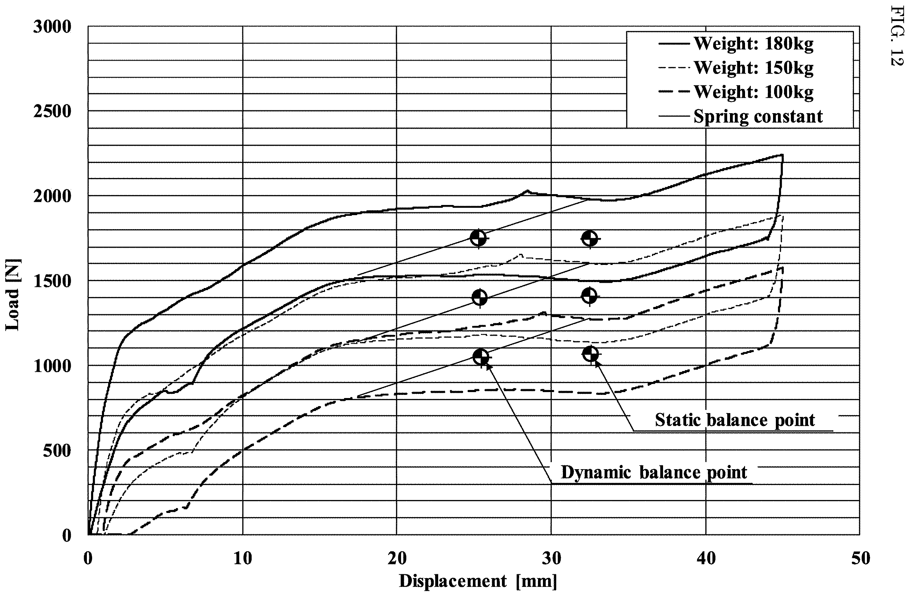

FIG. 12 illustrates the measurement results of the load-deflection characteristics of the seat suspension mechanism 1000 that employs the pantograph link mechanism 200. Note that one disclosed in WO2018/025992 was used as the damper 400 for pantograph. As illustrated in this drawing, it is seen that an about 15 mm constant load zone is formed near the balance point. Further, the dynamic spring constant in the drawing is 31472 N/m at the maximum because the spring force of the tensile coil spring 300 suspended to the pantograph link mechanism 200 produces the frictional force between the shafts and the frictional force becomes 374 to 403 N. However, the dynamic spring constant decreases as the seat suspension mechanism 1000 moves.

### Explanation of Reference Signs

- 1: damper
- 2: outer cylinder
- 22, 23: end wall
- 3: movable inner cylinder
- 31: peripheral wall
- 31a: orifice
- 32, 33: movable inner cylinder cover member
- 4: ball member
- 5: piston
- 51: piston rod
- 52: linear member
- 6: buffer member
- 7: viscous liquid
- 1000: seat suspension mechanism
- 1100: lower frame
- 1200: upper frame
- 200: pantograph link mechanism

## Claims

1. A damper comprising:
an outer cylinder;
a movable inner cylinder having a shorter axial-direction length than an axial-direction length of an inner space of the outer cylinder and movable in the outer cylinder;
a piston around whose outer peripheral surface a linear member that generates a frictional force with the movable inner cylinder is wound, and which operates in the axial direction in the movable inner cylinder; and
movable inner cylinder cover members provided at axial-direction ends of the movable inner cylinder,
wherein an orifice is formed in a peripheral wall of the movable inner cylinder, and a viscous liquid is filled in the outer cylinder including the inside of the movable inner cylinder and the nonwoven fabric, and
wherein, when the piston moves relative to the movable inner cylinder, a predetermined damping force is generatable owing to viscous friction generated between the piston and the movable inner cylinder and owing to viscous resistance of the viscous liquid passing through the orifice, whereas when the piston moves in the outer cylinder together with the movable inner cylinder, the predetermined damping force is not generated.

2. The damper according to claim 1, wherein a buffer member impregnated with the viscous liquid is provided in a gap between each of the movable inner cylinder cover members and each end wall of the outer cylinder.

3. The damper according to claim 1 or 2, wherein, in the movable inner cylinder and the movable inner cylinder cover members, at least inner surfaces are lower in friction coefficient than the viscous liquid.

4. The damper according to any one of claims 1 to 3, wherein the viscous liquid is low-penetration grease.

5. A seat suspension mechanism which is disposed between a vehicle body structure and a seat, the seat suspension mechanism comprising:
a spring mechanism through which an upper frame as the movable member attached to the seat is elastically supported on a lower frame as the fixed member attached to the vehicle body structure; and
the damper according to any one of claims 1 to 4 which exerts a damping force that absorbs energy generated when the upper frame moves up and down relative to the lower frame.
